# EUROPEAN PATENT APPLICATION

(11) **EP 4 618 348 A1**
(43) Date of publication of application: **17.09.2025**
(21) Application number: 22965006.4
(22) Date of filing: 30.12.2022
(51) Int. Cl.: H02J 3/01, H02J 3/24, H02J 3/46, H02M 1/08, H02M 7/5387

(54) **CONVERTER AND ZERO CROSSING POINT CONTROL METHOD THEREFOR**

(30) Priority: 08.11.2022 CN 202211391123
(71) Applicant: Sungrow Power Supply Co., Ltd., Hefei, Anhui 230088 (CN)
(72) Inventor: CHEN, Qiaodi, Hefei, Anhui 230088 (CN); YANG, Qijing, Hefei, Anhui 230088 (CN); FENG, Yangyang, Hefei, Anhui 230088 (CN); GU, Yu, Hefei, Anhui 230088 (CN)
(74) Representative: Biallo, Dario
(86) International application number: PCT/CN2022/144050
(87) International publication number: WO 2024/098542

(57) **Abstract**

Provided in the present application are a converter and a zero crossing point control method therefor. The zero crossing point control method comprises: first, determining whether the current power grid voltage is within a preset range of a zero crossing point; if the current power grid voltage is not within the preset range of the zero crossing point, controlling a primary-side circuit and a secondary-side circuit, which are connected to a transformer in a converter, to operate in a normal working mode; and if the current power grid voltage is within the preset range of the zero crossing point, controlling the primary-side circuit and the secondary-side circuit to operate in a preset working mode. That is, in the present application, a transition area is added near the zero crossing point, thereby reducing the frequent switching between the working modes of the primary-side circuit and the secondary-side circuit at the zero crossing point of the power grid voltage, reducing the current oscillation of the converter, such as a miniature inverter, at the zero crossing point, and reducing the **THD** of a grid-connected current.

## Description

This application claims the priority to Chinese Patent Application No. 202211391123.3, titled "CONVERTER AND METHOD FOR CONTROLLING THE SAME AT ZERO-CROSSING POINT", filed on November 08, 2022, with the China National Intellectual Property Administration, which is incorporated herein by reference in its entirety.

### FIELD

The present disclosure relates to the technical field of power electronics, and in particular to a converter and a method for controlling the converter at a zero-crossing point.

### BACKGROUND

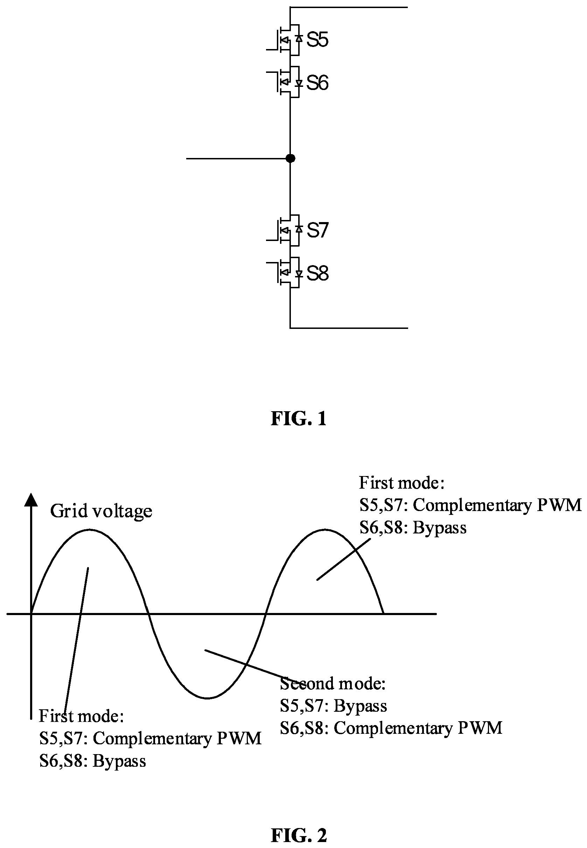

Various isolation converters utilize bidirectional switch circuits at their secondary sides to implement grid connection, and a bridge arm of the bidirectional switching circuit comprises two bidirectional switches, each of which serves as a half-bridge arm. Each bidirectional switch comprises two switching transistors connected back-to-back in series. As shown in FIG. 1, switching transistors S5 and S6 form the bidirectional switch in an upper half-bridge arm, and switching transistors S7 and S8 form the bidirectional switch in a lower half-bridge arm. During the positive and negative half-cycle of the grid voltage, on/off states of the switching transistors in the secondary side are controlled in different modes between positive half-cycles and negative half-cycles.

Generally, phase-shift control of the converter is closed-loop control, which is implemented through controlling an external phase-shift angle between a primary circuit and a secondary circuit and controlling an internal phase-shift angle between bridge arms of the primary circuit. The phase-shift control enables the converter to achieve single-stage grid-connection. During each positive or negative half-cycle of a grid voltage, the closed-loop control on the converter is subject to mode switching at a zero-crossing point.

In practice, the grid voltage has large distortion near the zero-crossing point and is apt to jump between positive and negative, i.e., there may be more than one zero-crossing point. Moreover, the voltage has a small value and low sampling accuracy near the zero-crossing point. As a result, when an operation mode is switched according to the zero-crossing point of the grid voltage, polarity may be misjudged in proximity to the zero-crossing point, and hence an error may occur may selecting the mode of controlling the primary and secondary circuits. In such case, the mode may be switched back and forth at the zero-crossing point and introduces oscillation, which influences a waveform of a grid-connected current near the zero-crossing point and thereby influences total harmonic distortion (THD) of the current. A short circuit at the grid side is expected in a worse case.

### SUMMARY

A converter and a method for controlling the converter at the zero-crossing point are provided according to embodiments of the present disclosure. An operation mode of primary and secondary circuits is less frequently switched at zero-crossing points of a grid voltage.

Following technical solutions are provided according to embodiments of the present disclosure.

In a first aspect, a method for controlling a converter at a zero-crossing point is provided according to an embodiment of the present disclosure. In the converter, each half-bridge arm of a secondary circuit connected to a transformer comprises a bidirectional switch, and the transformer is connected in series with an inductive device. The method comprises: determining whether a current grid voltage is within a predetermined range of zero-crossing; in response to the current grid voltage being not within the predetermined range, controlling a primary circuit and the secondary circuit, which are connected to the transformer, to operate in a normal operation mode; and in response to the current grid voltage being within the predetermined range, controlling the primary circuit and the secondary circuit to operate in a predetermined operation mode.

In an embodiment, the normal operation mode refers to an operation mode in which a normal strategy for controlling phase-shift and a normal strategy for controlling a secondary-side switch state are applied. The predetermined operation mode is one of: a first predetermined operation mode in which a predetermined strategy for controlling the phase-shift and the normal strategy for controlling the secondary-side switch state are applied; a second predetermined operation mode in which the normal strategy for controlling the phase-shift and a predetermined strategy for controlling the secondary-side switch state are applied; or a third predetermined operation mode in which the predetermined strategy for controlling the phase-shift and the predetermined strategy for controlling the secondary-side switch state are applied.

In an embodiment, the predetermined strategy for controlling the secondary-side switch state comprises: controlling switching transistors in all bidirectional switches to perform chopping operation under pulse width modulation (PWM) driving signals, where the driving signals of the switching transistors in a same half-bridge arm are identical, and the driving signals of the switching transistors in different half-bridge arms are complementary signals.

In an embodiment, there is a dead band between the driving signals of the switching transistors in different half-bridge arms.

In an embodiment, duration of the deadband is less than first predetermined duration.

In an embodiment, the predetermined strategy for controlling the secondary-side switch state comprises: controlling the secondary circuit to maintain an operation mode in which the secondary circuit operates currently.

In an embodiment, the predetermined strategy for controlling the secondary-side switch state comprises: controlling switching transistors in upper and lower half-bridge arms of the secondary circuit to be switched on.

In an embodiment, duration of controlling the switching transistors in the upper and lower half-bridge arms of the secondary circuit to be switched on is less than second predetermined duration.

In an embodiment, the predetermined strategy for controlling the phase-shift comprises open-loop control, where in the open-loop control, feedforward control is utilized to obtain an internal phase-shift angle and an external phase-shift angle that serves as a feedforward output.

In an embodiment, after an operation mode of the primary circuit and the secondary circuit is determined, the method further comprises: determining whether the current grid voltage is at a mode switching point; in response to the current grid voltage being at the mode switching point, performing, through soft-start, smooth switching between the external phase-shift angle under the normal strategy for controlling the phase-shift and the external phase-shift angle serving as the feedforward output.

In an embodiment, determining whether the current grid voltage is within the predetermined range of zero-crossing comprises: determining whether an instantaneous value of the current grid voltage is within a predetermined amplitude range, or whether a phase angle of the current grid voltage is within a predetermined angle range; in response to one or both of the instantaneous value of the current grid voltage being within the predetermined amplitude range and the phase angle of the current grid voltage being within the predetermined angle range, determining that the current grid voltage is within the predetermined range of zero-crossing.

In an embodiment, both the predetermined amplitude range and the predetermined angle range comprises: a first range representing that the grid voltage crosses zero from positive to negative, and a second range representing that the grid voltage crosses zero from negative to positive.

In a second aspect, a converter is provided according to embodiments of the present disclosure. The converter comprises a transformer, an inductive device, a primary circuit, a secondary circuit, and a controller, where: a first side of the primary circuit serves as a first side of the converter, a second side of the primary circuit is connected to a first side of the secondary circuit via the inductive device and the transformer that are connected in series, a second side of the secondary circuit serves as a second side of the converter and is connected to a power grid, each half-bridge arm of the secondary circuit comprises a bidirectional switch, all switching transistors in the primary circuit and the secondary circuit are under control of the controller, and the controller is configured to perform any method as described in the first aspect.

In an embodiment, the primary circuit comprises at least one sub-module. In a case that the at least one sub-module is multiple sub-modules, respective first sides of the multiple sub-modules are connected in series or in parallel to form the second side of the primary circuit, and respective second sides of the multiple sub-modules serve as ports of the first side of the primary circuit.

In an embodiment, each of the at least one sub-module is an H-bridge circuit.

In an embodiment, the secondary circuit comprises an alternating-current (AC) capacitor bridge arm and two half-bridge arms, where the two half-bridge arms are connected at a terminal of the first side of the secondary circuit, an intermediate node of the AC capacitor bridge arm serves as another terminal of the first side of the secondary circuit, and the two half-bridge arms as a whole are connected in parallel with the AC capacitor bridge arm between two terminals of the second side of the secondary circuit.

In an embodiment, the secondary circuit comprises four half-bridge arms, where: the four half-bridge arms form two bridge arms, each of which comprises two half-bridge arms connected in series, two terminals of each bridge arm are connected to two terminals, respectively, of the second side of the secondary circuit, respective intermedia nodes of the two bridge arms serve as two terminals of the first side of the secondary circuit, and a capacitor is connected between the two terminals of the second side of the secondary circuit.

In an embodiment, the secondary circuit comprises six half-bridge arms, where: the six half-bridge arms form three bridge arms, each of which comprises two half-bridge arms connected in series, two terminals of each bridge arm are connected to two terminals, respectively, of the first side of the secondary circuit, respective intermedia nodes of the three bridge arms serve as three terminals of the second side of the secondary circuit, and a respective capacitor is connected between every pair of the three terminals of the second side of the secondary circuit.

In an embodiment, the inductive device comprises: an inductor, or an inductor and a capacitor that are connected in series.

The method for controlling the converter at the zero-crossing point is provided according to embodiments of the present disclosure. First, it is determined whether the current grid voltage is within the predetermined range of zero-crossing. In a case that the current grid voltage is not within the predetermined range of zero-crossing, the primary circuit and the secondary circuit connected to the transformer in the converter are controlled to operate in the normal operation mode. In a case that the current grid voltage is within the predetermined range of zero-crossing, the primary circuit and the secondary circuit are controlled to operate in the predetermined operation mode. That is, a transition region in proximity to the zero-crossing point is configured, such that switching between different operation modes of the primary and secondary circuits are less frequent around the zero-crossing point of the grid voltage. Current oscillation at zero-crossing of converters such as micro-inverters are suppressed, which reduces total harmonic distortion of a grid-connected current.

### BRIEF DESCRIPTION OF THE DRAWINGS

Hereinafter drawings to be applied in embodiments of the present disclosure or in conventional technology are briefly described, in order to clarify illustration of technical solutions according to embodiments of the present disclosure or in conventional technology. Apparently, the drawings in the following descriptions are only some embodiments of the present disclosure, and other drawings may be obtained by those skilled in the art based on the provided drawings without exerting creative efforts.
FIG.1 is a schematic structure diagram of a bridge arm of a bidirectional switching circuit at a secondary side of a converter in conventional technology.
FIG. 2 is a schematic diagram showing on/off modes of switching transistors at a secondary side of a converter in conventional technology.
FIG. 3 and FIG. 4 are schematic diagrams of partial control in two closed-loop control modes of a phase-shift control strategy for a converter in conventional technology.
FIG. 5a, FIG. 5b, and FIG. 5c are schematic structural diagrams of a secondary circuit of a converter according to embodiments of the present disclosure.
FIG. 6 is a flowchart of a method for controlling a converter at a zero-crossing point according to an embodiment of the present disclosure.
FIG. 7 is a schematic diagram showing a graph of instantaneous amplitude and a phase angle of a grid voltage and showing starting and ending points of transition regions according to an embodiment of the present disclosure.
FIG. 8 is a schematic diagram of a graph of instantaneous amplitude of a grid voltage and showing switching moments of switch modes according to an embodiment of the present disclosure.
FIG. 9a and FIG. 9b are schematic diagrams of hysteresis loops for two switching moments of switch modes as shown in FIG. 8.
FIG. 10 is a schematic diagram showing a graph of instantaneous amplitude and a phase angle of a grid voltage and showing starting and ending points of transition regions according to another embodiment of the present disclosure.
FIG. 11 is a schematic diagram of partial control in a predetermined phase-shift control strategy according to an embodiment of the present disclosure.
FIG. 12 is a schematic diagram of partial control concerning adding a soft start module for an external phase angle to a predetermined phase-shift control strategy according to an embodiment of the present disclosure.
FIG. 13a is a flowchart of a method for controlling a converter at a zero-crossing point according to another embodiment of the present disclosure.
FIG. 13b is a flowchart for setting a phase-shift control strategy according to another an embodiment of the present disclosure.
FIG. 14 is a schematic structural diagram of a converter according to an embodiment of the present disclosure.
FIG. 15a is a schematic circuit diagram of a converter according to an embodiment of the present disclosure.
FIG. 15b is a schematic circuit diagram of a converter according to another embodiment of the present disclosure.

### DETAILED DESCRIPTION

Hereinafter technical solutions in embodiments of the present disclosure are described clearly and completely in conjunction with the drawings in embodiments of the present closure. Apparently, the embodiments described are only some rather than all the embodiments of the present disclosure. Any other embodiments obtained based on the embodiments of the present disclosure by those skilled in the art without any creative effort fall within the scope of protection of the present disclosure.

Herein terms such as "include", "comprise" or any other variants thereof means to be non-exclusive. Therefore, a process, a method, an article, or a device including a series of elements include not only the disclosed elements but also other elements that are not clearly enumerated, or further include inherent elements of the process, the method, the article, or the device. Unless expressively limited, the statement "including a..." does not exclude the case that other similar elements may exist in the process, the method, the article, or the device other than enumerated elements.

Secondary sides of various converters utilize a bidirectional switching circuit for grid connection. A normal strategy for controlling a secondary-side switch state (hereinafter normal secondary-side switch-state strategy) for these converters are as follows. In case of a positive grid voltage, switching transistors in all bridge arms of the secondary side (as shown in FIG. 1) operate in a first mode, where S5 and S7 are under control of complementary high-frequency pulse width modulation (PWM) signals and perform high-frequency chopping, and S6 and S8 are switched on. In case of a negative grid voltage, the switching transistors of the secondary side operate in a second mode, where S6 and S8 are under control of complementary high-frequency PWM signals and perform high-frequency chopping, and S5 and S7 be switched on. A main controller of the converter determines a polarity of the grid voltage and accordingly controls transition of the switching transistors in the secondary side between the different operation modes. A logic of the transition is as shown in FIG. 2.

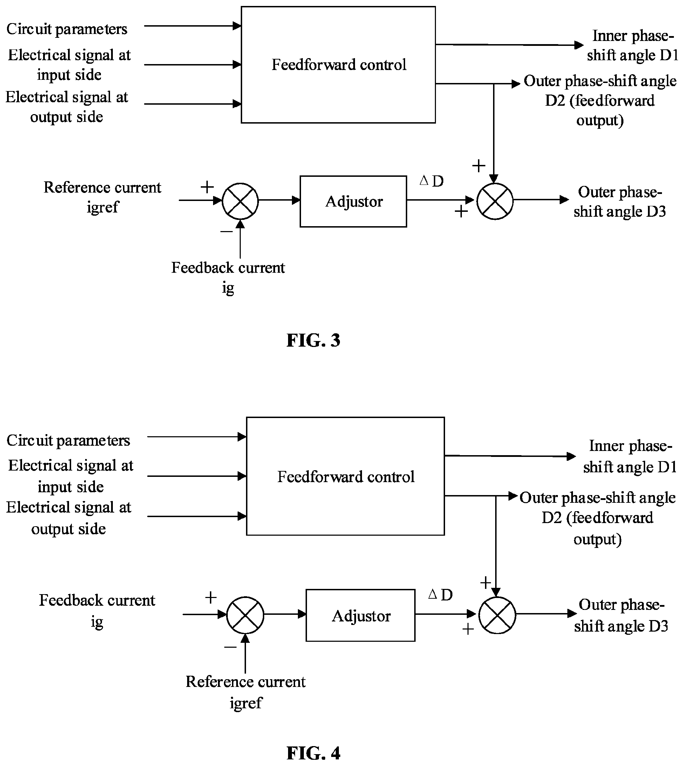

The converter adopts a normal strategy for controlling phase-shift (hereafter normal phase-shift control strategy), in which the closed-loop control mode is also switched between the positive half-cycles and the negative half-cycles of the grid voltage. As an example, a primary circuit is an H-bridge circuit. In the positive half-cycle, i.e., the grid voltage is greater than zero, a first closed-loop control mode using negative feedback as shown in FIG. 3 is utilized. Through feedforward control, an internal phase-shift angle D1 among bridge arms of the primary circuit and an external phase-shift angle D2, which serves as a feedforward output, between the primary circuit and a secondary circuit are determined according to circuit parameters, an electrical signal at an input side of the converter, and an electrical signal at an output side of the converter. A feedback current ig serves as negative feedback, the feedback current *ig* is subtracted from a reference current *igref* to obtain a difference, and the difference is inputted into a regulator to obtain an adjustment amount ΔD. Then, the adjustment amount ΔD is added to the external phase-shift angle D2 to obtain a final external phase-shift angle D3. Thereby, the primary circuit and the secondary circuit of the converter are controlled to operate in the first closed-loop control mode according to the internal phase-shift angle D1 and the external phase-shift angle D3. In the negative half-cycle of the grid voltage, a second closed-loop control mode using negative feedback as shown in FIG. 4 is utilized. The second closed-loop control mode differs from the first closed-loop control mode as shown in FIG. 3 in that the difference input into the regulator is obtained through subtracting the reference current *igref* from the current feedback *ig.* Thereby, the primary circuit and the secondary circuit of the converter are controlled to operate in the second closed-loop control mode according to the corresponding internal phase-shift angle D1 and corresponding external phase-shift angle D3.

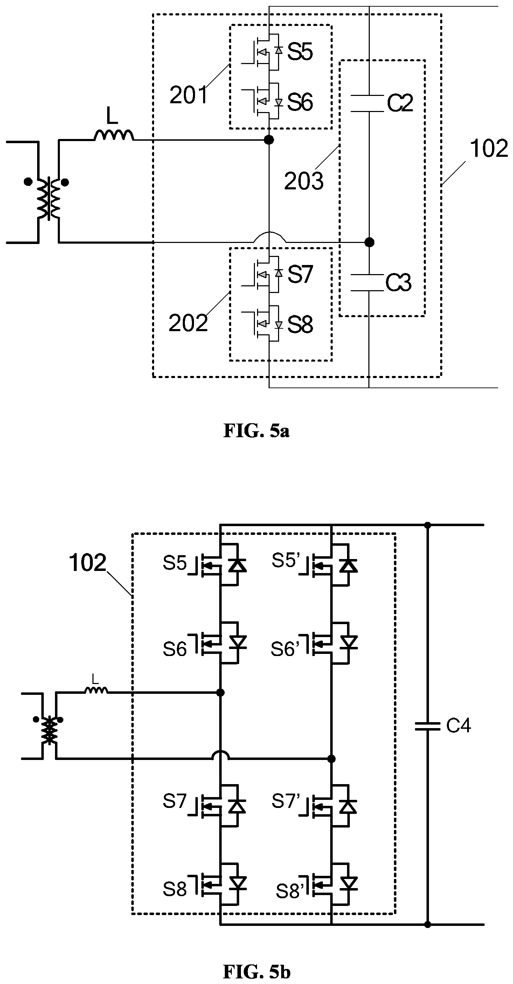

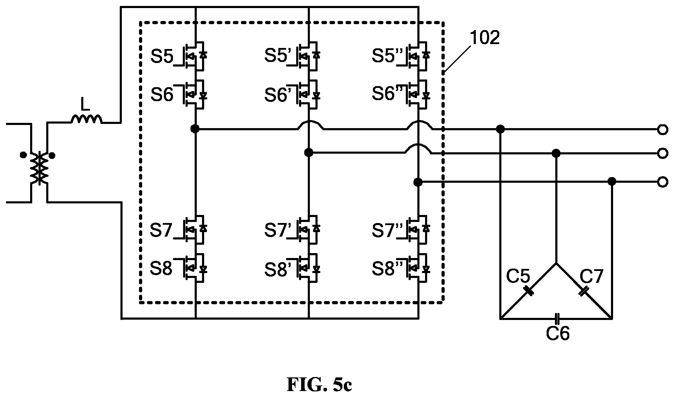

In practice, a converter may use the bridge arm as shown in FIG. 1 in its secondary circuit. A specific structure of the secondary circuit may be a single-phase structure indicated by box 102 as shown in FIG. 5a or FIG. 5b, or a three-phase structure indicated by box 102 as shown in FIG. 5c. In either case, half-bridge arms of the secondary circuit are implemented through bidirectional switches, and an operation mode of the secondary circuit may be frequently switched at a zero-crossing point of the grid voltage.

Herein a method for controlling a converter at a zero-crossing point is provided according to embodiments of the present disclosure. An operation mode of primary and secondary circuits is less frequently switched at zero-crossing points of a grid voltage.

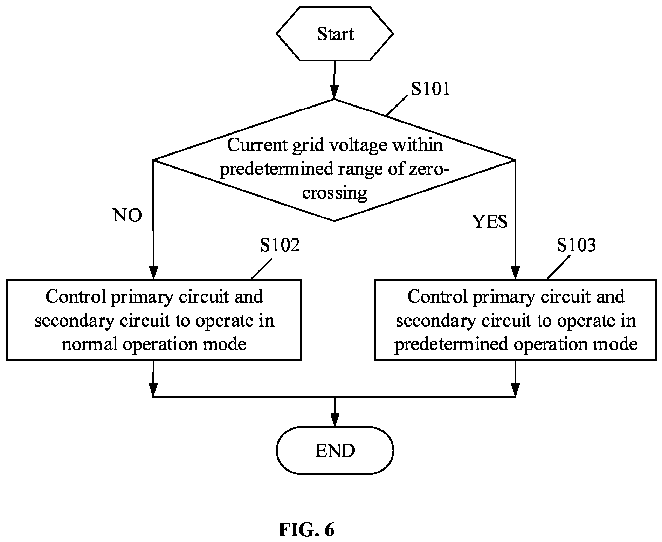

Reference is made to FIG. 6. A method for controlling a converter at a zero-crossing point comprises steps S101 to S103.

In step S101, it is determined whether a current grid voltage is within a predetermined range of zero-crossing.

The predetermined range of zero-crossing comprises at least the zero-crossing point. In an embodiment, the predetermined range of zero-crossing may be centered at the zero-crossing point and merely covers proximity of the zero-crossing point. The zero-crossing predetermined range of zero-crossing may alternatively not be centered at the zero-crossing point. The predetermined range is required to cover a range in which the operation mode is likely to switch frequently according to conventional technology, and higher and lower limits of the predetermined range may be determined according to a specific application environment, which is not limited herein.

In practice, the grid voltage may be determined according to its phase angle. That is, step S101 may comprise following sub-steps. It is determined whether the current grid voltage phase angle is within a predetermined phase angle range. In a case that the current grid voltage phase angle is within the predetermined phase angle range, it is determined that the current grid voltage is within the predetermined range of zero-crossing. Alternatively, the determination concerning the grid voltage may be based on instantaneous amplitude of the grid voltage. That is, step S101 may comprise following sub-steps. It is determined whether instantaneous amplitude of the current grid voltage is within a predetermined amplitude range. In a case that the instantaneous amplitude of the current grid voltage is within the predetermined amplitude range, it is determined that the current grid voltage is within the predetermined range of zero-crossing.

There are two types of zero-crossing, i.e., the grid voltage crossing zero from positive to negative, and the grid voltage crossing zero from negative to positive. Hence, the predetermined phase angle range and the predetermined amplitude range each may comprise a first range, in which the grid voltage crosses zero from positive to negative, and a second range, in which the grid voltage crosses zero from negative to positive.

The predetermined phase angle range may be configured to be a first range [0.97π, 1.03π) and a second range [1.97π, 0.03π), or a first interval [0.97π, π] and a second interval [1.97π, 2π]. The predetermined amplitude range may be configured in correspondence to the predetermined phase angle range, which is not illustrated herein. The above two examples are optional, and the present disclosure is not limited thereto. The ranges may be determined according to an application environment, and other examples also fall within the scope of the present disclosure.

The process proceeds to step S102 in a case that the current grid voltage is not within the predetermined range of zero-crossing and proceeds to step S103 in a case that the current grid voltage is within the predetermined range of zero-crossing.

In step S102, a primary circuit and a secondary circuit that are connected to a transformer of the converter are controlled to operate in a normal operation mode.

In the normal operation mode, the normal phase-shift control strategy and the normal secondary-side switch-state strategy as illustrated in the foregoing description are adopted.

There are two cases of the current grid voltage not within the predetermined range of zero-crossing. The grid voltage is greater than zero in one case and is less than zero in the other.

The structure shown in FIG. 5a is taken as an example. In the normal secondary-side switch-state strategy, the secondary circuit operates in a first mode when the grid voltage is greater than zero, where switching transistors S5 and S7 perform high-frequency chopping under complementary PWM signals and switching transistors S6 and S8 be switched on. Moreover, the secondary circuit operates in a second mode when the grid voltage is smaller than zero, where switching transistors S6 and S8 perform high-frequency chopping under complementary PWM signals and switching transistors S5 and S7 be switched on.

In the normal secondary-side switch-state strategy, the first closed-loop control mode using negative feedback shown in FIG. 3 is adopted when the grid voltage is greater than zero, and the second closed-loop control mode using negative feedback as shown in FIG. 4 is adopted when the grid voltage is smaller than zero.

In step S103, the primary circuit and the secondary circuit are controlled to operate in a predetermined operation mode.

In this step, when the grid voltage is within the predetermined range of zero-crossing, the primary circuit and the secondary circuit are controlled to operate in the predetermined operation mode. In practice, the predetermined operation mode can be any of the following modes. A first predetermined operation mode is a mode in which a predetermined strategy for controlling the phase shift (hereinafter predetermined phase-shift control strategy) and the normal secondary-side switch-state strategy are adopted. A second predetermined operation mode is a mode in which the normal phase-shift control strategy and a predetermined strategy for controlling the secondary-side switch state (hereinafter predetermined secondary-side switch-state strategy) are adopted. A third predetermined operation mode is a mode in which the predetermined phase-shift control strategy and the predetermined secondary-side switch-state strategy are adopted.

The third predetermined operation mode is taken as an example. Even when the grid voltage is subject to problems such as distortion, zero-crossing jumps, and poor sampling accuracy, the phase-shift control is maintained to use the fixed predetermined strategy. That is, the phase-shift control is not frequently switched between the first closed-loop control mode and the second closed-loop control mode. At the same time, the secondary circuit is controlled to maintain the predetermined fixed switch-state strategy. That is, the secondary circuit is not frequently switched between the first mode and the second mode. Hence, current oscillation of converters such as micro-inverters is suppressed at zero-crossing points, and total harmonic distortion (THD) of the grid-connected current is reduced.

Each of the first predetermined operation mode and the second predetermined operation mode fixes only one of the phase-shift control strategy and the secondary on-off control strategy when grid voltage is within the predetermined range of zero-crossing. In these two modes, the current oscillation of converters can still be suppressed at zero-crossing points, and total harmonic distortion (THD) of the grid-connected current can still be reduced.

A principle of the method provided herein is as follows. A transition region in proximity to the zero-crossing point is configured, such that switching between different operation modes of the primary and secondary circuits are less frequent around the zero-crossing point of the grid voltage. Thereby, the current oscillation at zero-crossing of the converters such as micro-inverters are suppressed, which reduces the THD of the grid-connected current.

In an embodiment, the predetermined secondary-side switch-state strategy in step S103 may comprise following operations. Switching transistors in all bidirectional switches perform chopping under PWM, where driving signals of the switching transistors in the same half-bridge arm are identical, and driving signals of the switching transistors in different half-bridge arms are complementary.

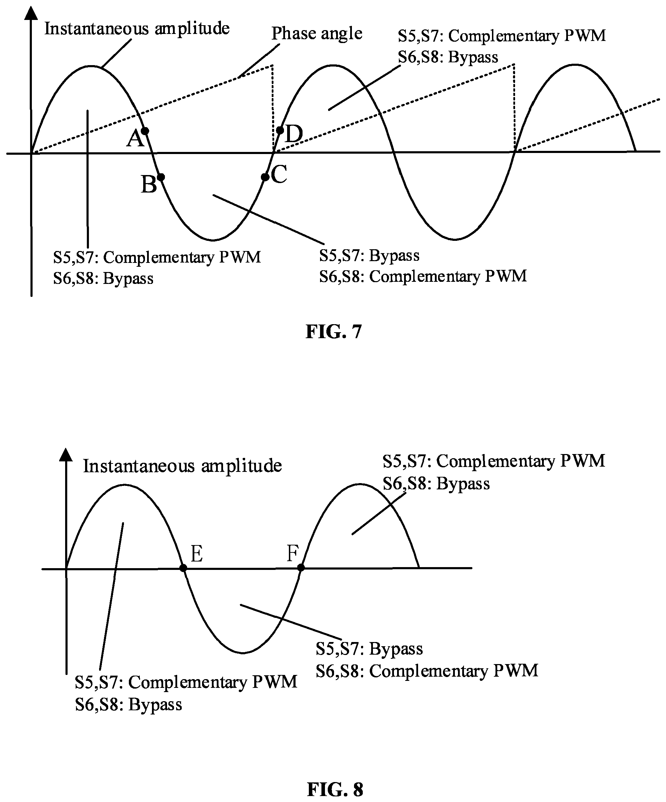

As shown in FIG. 7, a transition region of high-frequency chopping is added at the zero-crossing point of the grid voltage to implement the predetermined range of zero-crossing. Thereby, a switch state (i.e., the on/off states of switch transistors) of the secondary circuit transitions between different modes at a point far away from the zero-crossing point, and such point is easy to be determined through detection. The transition region comprises a range from point A to point B (i.e., the first range) and a range from C to D (i.e., the second range). In the transition region, the driving signals of switching transistors S5 and S6 are identical, the driving signals of switching transistors S7 and S8 are identical, and the driving signals of switching transistors S5 and S7 are complementary to each other. In other words, the driving signals of switching transistors in the upper half-bridge arm are complementary to the driving signals of switching transistors in the lower half-bridge arm.

In practice, a phase angle of the grid voltage may be obtained through a phase-locked loop, and the points A, B, C, and D can be detected through a value of the phase angle. In an embodiment, a temporal length of the transition region is set to 600µs. For example, the phase angle theta_A at point A is equal to 0.97π, the phase angle theta_B at point B is equal to 1.03π, the phase angle theta _C at point C is equal to 1.97π, the phase angle theta_D at point D is equal to 0.03π, an actual phase angle obtained by the phase-locked loop is denoted as theta, and a logic of the transition is as follows.

When theta_D ≤ theta < theta_A, the secondary circuit operates in the first mode, where switching transistors S5 and S7 perform high-frequency chopping under complementary PWM signals, and switching transistors S6 and S8 be switched on.

When theta_A ≤ theta < theta_B, the secondary circuit operates under the predetermined secondary-side switch-state strategy, where switching transistors S5 and S6 perform high-frequency under identical PWM signals, switching transistors S7 and S8 perform high-frequency under identical PWM signals, and the PWM signals of switching transistors S5 and S7 are complementary to each other.

When theta_B ≤ theta < theta_C, the secondary circuit operates in the second mode, where switching transistors S6 and S8 perform high-frequency chopping under complementary PWM signals, and switching transistors S5 and S7 be switched on.

When theta_C ≤ theta < theta_D, the secondary circuit operates under the predetermined secondary-side switch-state strategy, where switching transistors S5 and S6 perform high-frequency under identical PWM signals, switching transistors S7 and S8 perform high-frequency under identical PWM signals, and the PWM signals of switching transistors S5 and S7 are complementary to each other.

Thereby, the method for controlling the converter at the zero-crossing point is based on the transition regions of high-frequency chopping. The transition region in which all switching transistors perform high-frequency chopping is added and covers both left and right sides of the zero-crossing points of the grid voltage. The addition avoids oscillations occurring when the secondary-side switching-state mode is switched due to erroneous determination of the zero-crossing points. Hence, waveform distortions of the grid-connected current are prevented in proximity to the zero-crossing points of the grid voltage.

In practice, when the upper half-bridge arm (comprising switching transistors S5 and S6 as shown in FIG. 1) and the lower half-bridge arm (comprising switching transistors S6 and S7 as shown in FIG. 1) are switched under control of the complementary PWM signals, a deadband may be configured in the transition region to prevent the half-bridge arms from providing a short path. That is, the deadband is with respect to the driving signals of the switching transistors in two half-bridge arms. During the deadband, all switching transistors are turned off during the dead band, and the current is held due to the inductor in the secondary circuit, and the current freewheels via parasitic capacitors of the switching transistor. In a case that the deadband lasts long, a voltage on the parasitic capacitor of the switching transistor would be too high, and the switching transistor may be damaged due to overvoltage. Hence, duration of the deadband of the transition region may be limited, that is, the duration of the deadband may be set to be less than first predetermined duration. For example, as a reference, duration of a deadband of a non-transition region (e.g., in the normal operation mode) may be 300ns, and the duration of the deadband of the transition region may be 50ns. Specific duration is not limited herein and may be determined according to an application environment. Limiting the duration of the deadband of the driving signals of the switching transistors in the transition region can reduce an impact of the inductor current on the switching transistors and reduce stress on the switching transistors.

In another embodiment, the predetermined secondary-side switch-state strategy in step S103 may comprise a following operation. The secondary circuit maintains a current operation mode.

For example, the secondary circuit maintains the first mode when the grid voltage enters the first range from the positive half-cycle and maintains the second mode when the grid voltage enters the second range from the negative half-cycle.

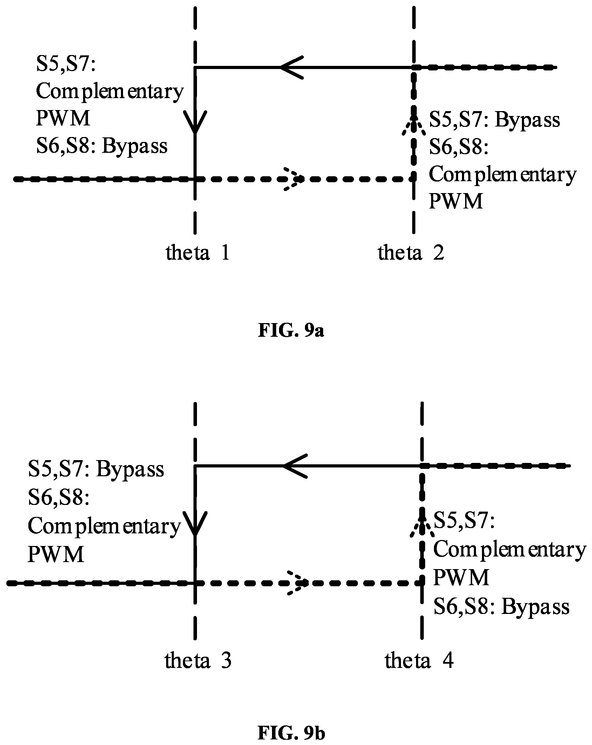

In an embodiment, hysteresis loops may be added to points E and F as shown in FIG. 8 to avoid oscillations due to transitions between different switch-state modes of the secondary circuit. The hysteresis loop at point E is as shown in FIG. 9a. The grid phase angle obtained through the phase-locked loop is denoted as theta. Taking the bridge arm as shown in FIG. 1 as an example, a logic of mode transition is as follows. When theta increases to be larger than theta2, the switch state is switched to that switching transistors S5 and S7 be switched on and switching transistors S6 and S8 perform high-frequency chopping under complementary PWM signals. When theta increases to be smaller than theta1, the switch state is switched to that switching transistors S5 and S7 perform high-frequency chopping under complementary PWM signals and switching transistors S6 and S8 be switched on. Similarly, the hysteresis loop at point F is as shown in FIG. 9b, and the logic of mode transition is as follows. When theta increases to be larger than theta4, the switch state is switched to that switching transistors S5 and S7 perform high-frequency chopping under complementary PWM signals and switching transistors S6 and S8 be switched on. When theta increases to be smaller than theta3, the switch state is switched to that switching transistors S5 and S7 be switched on and switching transistors S6 and S8 perform high-frequency chopping under complementary PWM signals.

In an embodiment, theta1 = 0.97π, theta2 = π, theta3 = 1.97π, theta4 = 2π. The values are not limited to the above example and may depend on an application environment.

Thereby, the method for controlling the converter at the zero-crossing point may be based on transition regions of hysteresis loops. Moments of switching the switch state of the secondary circuit is configured at points E and F as shown in FIG. 8, and the transition region of the hysteresis loops serves as the predetermined range of zero-crossing. The zero-crossing hysteresis loop can also address the oscillations due to transitions between different switch states of the secondary circuit in proximity to the zero-crossing points. Hence, smooth transitions between different switch states of the secondary circuit can be achieved.

In another embodiment, the predetermined secondary-side switch-state strategy in step S103 may comprise a following operation. Both the upper and lower half-bridge arms of the secondary circuit are kept on.

Since the grid voltage is small in proximity to the zero-crossing is small, a transition region in which all transistors are switched on may serve as the predetermined range of zero-crossing to avoid frequent mode transitions at zero-crossing. That is, the transition regions of high-frequency chopping as shown in FIG. 7 in the forgoing embodiment (s) are replaced with the all-transistor-on transition regions, where switching transistors S5, S6, S7 and S8 are kept on in the transition regions. Thereby, the moments of switching modes are kept away from the zero-crossing points, and smooth transitions between different switch states are achieved.

The method based on the all-transistor-on transition regions can also avoid oscillations due to transitions between different switch states of the secondary circuit in proximity to the zero-crossing points.

In practice, duration of both the upper and lower half-bridge arms of the secondary circuit being kept on may be limited to avoid a large short-circuit current due to all transistors of the bridge arm are switched on. For example, the duration is limited to not exceed second predetermined duration. The second predetermined duration may be 100ns, which is not limited herein and may be adjusted according to an actual application environment.

In an embodiment, the predetermined phase-shift control strategy in step S103 may comprise open-loop control. In the open-loop control, an internal phase-shift angle D1 and an external phase-shift angle D2, which serves as a feedforward output, are obtained through feedforward control .

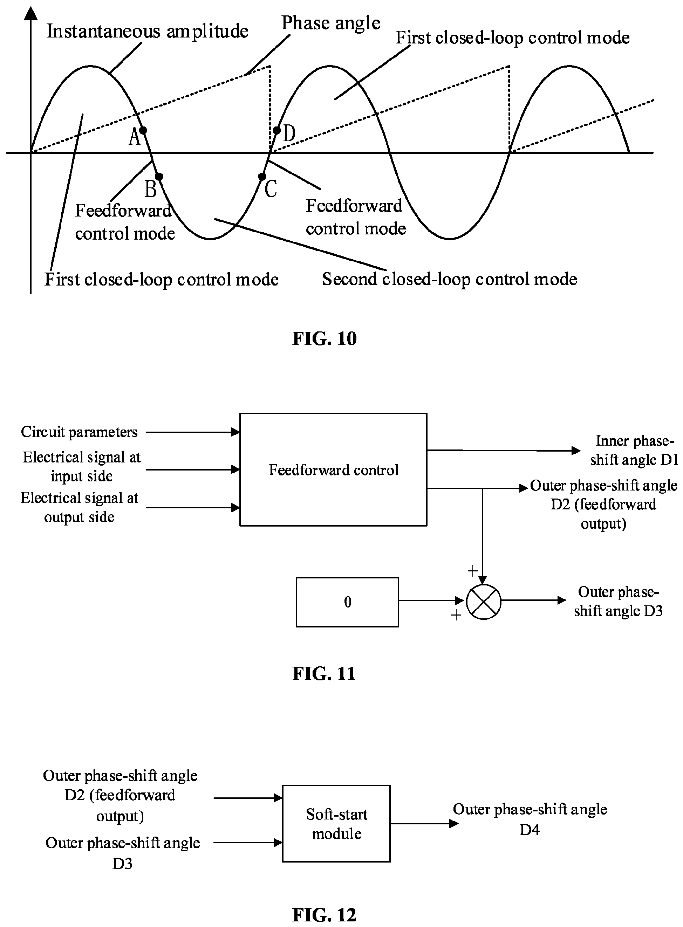

As shown in FIG. 10, a region without closed-loop control is configured at the zero-crossing point of the grid voltage and serves as the predetermined range of zero-crossing. Such region moves moments of transitions of different control modes in the phase-shift control strategy far away from the zero-crossing points, such that the moments can be easily determined through detection. The region without closed-loop control region may comprise: a range from point A to point B and a region from point C to point D. In such region, only open-loop control is performed through a feedforward link, as shown in FIG. 11. Therefore, it is avoided that the erroneous transition between different closed-loop control modes using negative feedback in the phase-shift control strategy results in positive feedback.

In practice, a phase angle of the grid voltage may be obtained through a phase-locked loop, and the points A, B, C, and D can be detected through a value of the phase angle. In an embodiment, a temporal length of the transition region is set to 200µs. For example, the phase angle theta_A at point A is equal to 0.99π, the phase angle theta_B at point B is equal to 1.01π, the phase angle theta_C at point C is equal to 1.90π, the phase angle theta_D at point D is equal to 0.01π, an actual phase angle obtained by the phase-locked loop is denoted as theta, and a logic of the transition is as follows.

When theta_D ≤ theta < theta_A, the predetermined phase-shift control strategy adopts the first closed-loop control mode using negative feedback as shown in FIG. 3.

When theta_A≤ theta < theta_B, the predetermined phase-shift control strategy adopts only a feedforward control mode as shown in FIG. 11.

When theta_B ≤ theta < theta_C, the predetermined phase-shift control strategy adopts the second closed-loop control mode using negative feedback as shown in FIG. 4.

When theta_C ≤ theta < theta_D, the predetermined phase-shift control strategy adopts only a feedforward control mode as shown in FIG. 11.

In practice, the region without closed-loop control may be configured with the temporal length of 600us, and in such case, values of theta_A to theta_D may be configured as the above embodiment. No matter how the positions of points A, B, C, and D are selected, points A, B, C, and D can be used as switching points of the control mode in the phase-shift control strategy. Points A, B, C, and D always serve as points at which the control mode is changed in the phase-shift control strategy regardless of their specific positions. The specific positions may depend on an application environment and are not limited herein.

Hence, the region in which power transmission of the converter is not under closed-loop control but only under feedforward control is configured in proximity to the zero-crossing point of the grid voltage. Thereby, erroneous selection of closed-loop control mode in the phase-shift control strategy at zero-crossing transitions is addressed, quality of the grid-connected current is improved for closed-loop control, and the THD of the grid-connected current is reduced.

In the above strategy, switching between the closed-loop control and feedforward control occurs at points A, B, C, and D, and the external phase-shift angle obtained from closed-loop control and that obtained from the feedforward control may differ a lot. A drastic change in the external phase-shift angle would introduce oscillations in the grid-connected current. In order to reduce these oscillations, a soft-start module as shown in FIG. 12 may be added to process the external phase-shift angle at the four switching points, i.e., A, B, C, and D, such that a change in the external phase-shift angle is impeded. Thereby, smooth transitions of the system between the closed-loop control and the feedforward control.

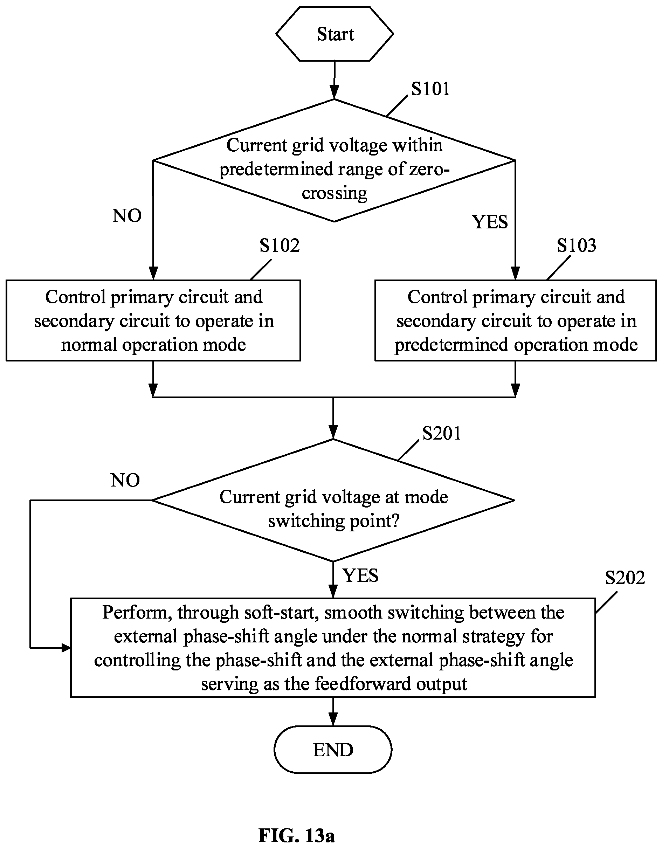

In such case, the method may be as shown in FIG. 13a. After the operation mode of the primary circuit and the secondary circuit is determined, the method further comprises steps S201 and S202.

In step S201, it is determined whether the current grid voltage is at a mode switching point.

The process goes to step S202 in a case that the current grid voltage is at the mode switching point.

In step S202, smooth switching is performed, through soft-start, between the external phase-shift angle under the normal phase-shift control strategy and the external phase-shift angle serving as the feedforward output.

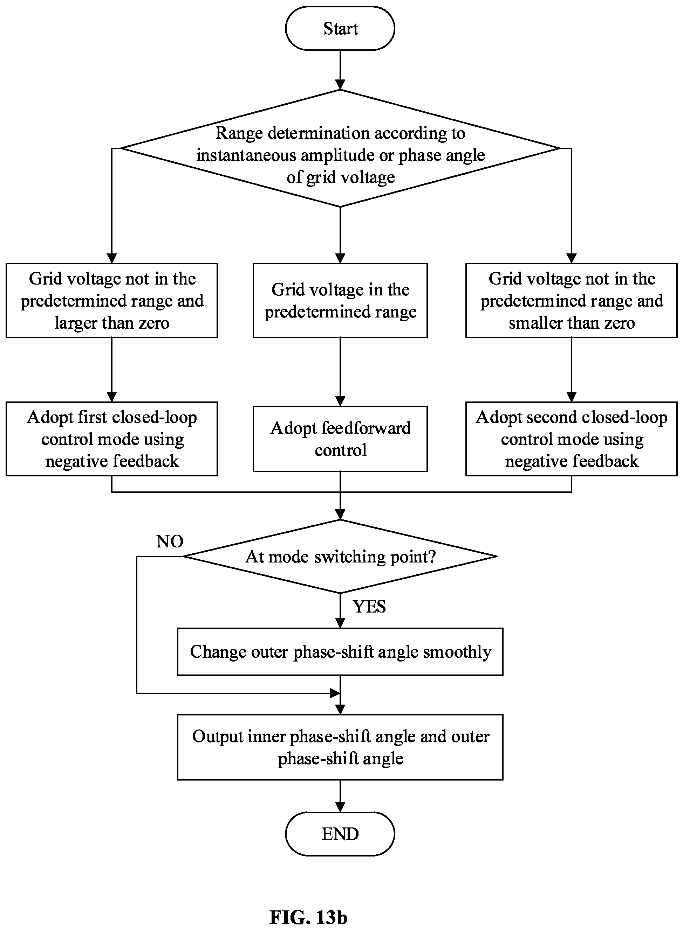

That is, the phase-shift control strategy may be configured as shown in FIG. 13b. First, range determination is made according to instantaneous amplitude of the grid voltage or a phase angle of the grid voltage. In a case that the current grid voltage is within the predetermined range of zero-crossing, the feedforward control, i.e., the foregoing open-loop control is adopted. In a case that the current grid voltage is not within the predetermined range of zero-crossing and is greater than zero, the first closed-loop control mode using negative feedback is adopted. In a case that the current grid voltage is not within the predetermined range of zero-crossing and is smaller than zero, the second closed-loop control mode using negative feedback is adopted. Then, it is determined whether the current grid voltage is at a mode switching point. In a case that the current grid voltage is at the mode switching point, the external phase angle is smoothly changed through soft-start. Afterwards, the internal phase angle and the final external phase angle are output.

Hence, the closed-loop control is replaced with the feedforward control at the zero-crossing points to avoid distortion of the grid-connected current, which is caused by erroneous selection of the control mode in the phase-shift control strategy due to grid voltage fluctuations in proximity to the zero-crossing points. Quality of grid-connected power is improved. Moreover, a soft-start module is configured at the four mode switching points to suppress oscillations at mode-switching moments. That is, amplitude of the external phase angle is subject to additional limits. Oscillations of the grid-connected current due to oscillations of the external phase angle are thus avoided.

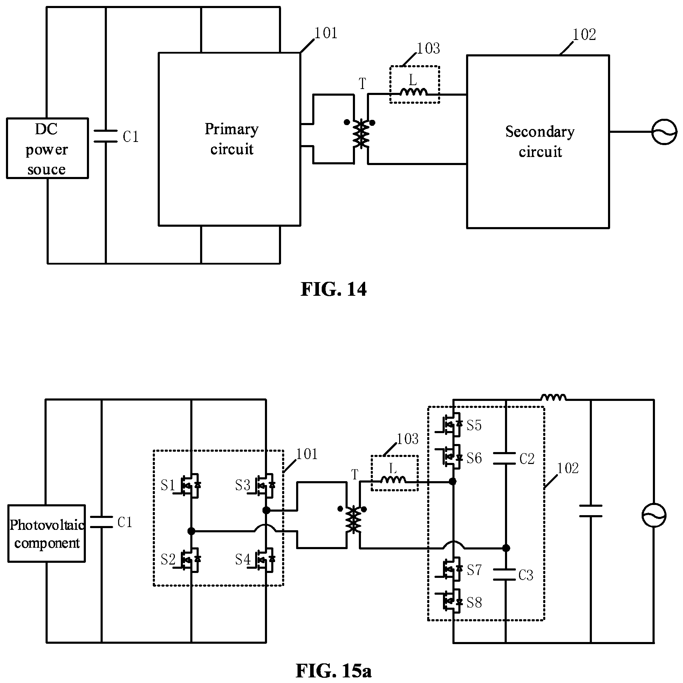

A converter is further provided according to another embodiment of the present disclosure. As shown in FIG. 14, the converter comprises: a transformer T, a primary circuit 101, a secondary circuit 102, an inductive device 103, and a controller (not depicted in FIG. 14).

A first side of the primary circuit 101 serves as a first side of the converter. A second side of the primary circuit 101 is connected to a first side of the secondary circuit 102 via the inductive device 103 and the transformer T that are connected in series. A second side of the secondary circuit 102 serves as a second side of the converter.

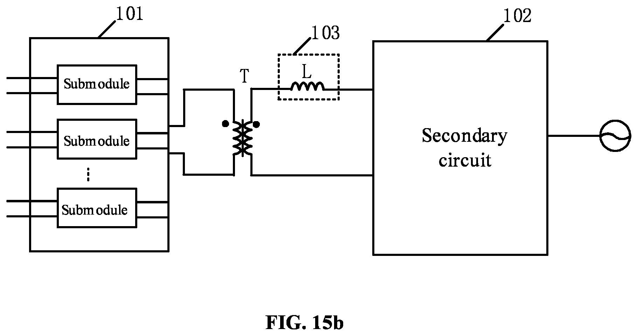

The primary circuit 101 comprises at least one sub-module. As shown in FIG. 15a, there is only one sub-module in the primary circuit 101. As shown in FIG.15b, there are mor than one sub-modules, respective first sides of all the sub-modules are connected in series or in parallel to form the second side of the primary circuit 101, and respective second sides of the sub-modules serve as ports at the first side of the primary circuit 101.

In practice, each sub-module may be a H-bridge circuit (comprising switching transistors S1 to S4 as shown in FIG. 15a). In such case, the converter is a single-stage inverter. The first side of the converter is a direct-current side, which is connected to a direct-current capacitor (such as C1 as shown in FIG. 14) and a direct-current power supply. The direct-current power supply may be a photovoltaic component or a battery module in an energy storage system. The second side of the converter is an alternating-current (AC) side, which is connected to a single-phase or three-phase power grid.

Each half-bridge arm of the secondary circuit 102 may comprise a bidirectional switches, and the bidirectional switch may comprise two switching transistors (for example, S5 and S6, S7 and S8, S5' and S6', S7' and S8', S5" and S6", or S7" and S8", as shown in FIGS. 5a to 5c) that are connected in a back-to-back manner. Each switching transistor may be a metal-oxide-semiconductor field-effect transistor (MOSFET), an insulated gate bipolar transistor (IGBT) with an anti-parallel diode, or the like. The present disclosure is not limited to the above example, and specific configuration may depend on an application environment.

As shown in FIG. 5a, the secondary circuit 102 may comprise an AC capacitor bridge arm 203 and two half-bridge arms 201 and 202. The half-bridge arm 201 and the half-bridge arm 202 are connected at a node, and the node is also connected to a terminal of the first side of the secondary circuit 102. The AC capacitor bridge arm 203 comprises capacitors C2 and C3 that are connected in series. An intermediate node, that is, a common node of the capacitors C2 and C3, in the AC capacitor bridge arm 203 is connected to another terminal of the first side of the secondary circuit 102. The two half-bridge arms 201 and 202, as a whole bridge arm, are connected in parallel with the AC capacitor bridge arm 203 between two terminals of the second side of the secondary circuit 102.

As shown in FIG. 5b, the secondary circuit 102 may comprise four half-bridge arms. The four half-bridge arms comprise two pairs of half-bridge arms, where each pair comprises two half-bridge arms connected in series as a bridge arm. Two terminals of each bridge arm are connected to two terminals, respectively, of the second side of the secondary circuit 102. The intermediate node in each bridge arm is connected to a respective terminal of the first side of the secondary circuit 102. A capacitor C4 is connected between the two terminals of the second side of the secondary circuit 102.

As shown in FIG. 5c, the secondary circuit 102 may comprise six half-bridge arms. The six half-bridge arms comprise three pairs of half-bridge arms, where each pair comprises two half-bridge arms connected in series as a bridge arm. Two terminals of each bridge arm are connected to two terminals, respectively, of the first side of the secondary circuit 102. The intermediate node in each bridge arm is connected to a respective terminal of the first side of the secondary circuit 102. A respective capacitor C5/C6/C7 is connected between every pair of terminals of the secondary circuit 102.

In practice, the inductive device 103 may be connected between a secondary winding of the transformer T and the secondary circuit 102, as shown in FIG. 14. In practice, the inductive device 103 (not depicted in the drawings) may alternatively be connected between the primary winding of the transformer T and the primary circuit 101. Specific connection may depend according to an application environment and is not limited herein.

The inductive device 103 may comprise an inductor only (such as L as shown in FIG. 5a to FIG. 5c and FIG. 14 to FIG. 15b) or may comprise an inductor and a capacitor connected in series, which is not limited herein and may depend on an application environment.

The primary circuit 101 and the secondary circuit 102 are both under control of a controller, and the controller is configured to perform the method for controlling the converter at the zero-crossing control point as described in any foregoing embodiment. A process and a principle of the method may refer to the foregoing embodiments and would not be repeated herein.

Reference is made to FIG. 15a. The primary circuit 101 may be an H-bridge circuit and the secondary circuit 102 may adopt the single-phase structure as shown in FIG. 5a. In such case, the converter may serve as a micro inverter, and the internal high-frequency transformer T of the inverter can achieve boosting and isolation between the primary side and the secondary sides. Structures of the primary circuit 101 and the secondary circuit 102 and a position of the inductive device 103 may be configured otherwise, which is not limited herein.

The method in each foregoing embodiment can introduce the transition region, which reduces oscillations due to mode transition of the primary circuit and the secondary circuit at the zero-crossing points, improves a waveform of the grid-connected current, and reduces the THD of the grid-connected current.

The embodiments of the present disclosure are described in a progressive manner, and each embodiment places emphasis on the difference from other embodiments. Therefore, one embodiment can refer to other embodiments for the same or similar parts. Since systems disclosed in the embodiments correspond to methods disclosed in the embodiments, the description of the systems is simple, and reference may be made to the relevant part of the methods. The system and system embodiments described above are only illustrative. Units described as separate components may or may not be physically separated. Components shown as units may or may not be physical units, that is, they may be located in one place or distributed over multiple network elements. Some or all modules may be selected according to an actual requirement to achieve an object of a solution of an embodiment. Those skilled in the art can understand and implement the solution without any creative effort.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation should not be considered to depart from the scope of the present disclosure.

On a basis of the embodiments as illustrated above, the features in different embodiments of the present disclosure may be mutually replaced or combined, so that those skilled in the art can implement or utilize the present disclosure. Various modifications to these embodiments would be apparent to those skilled in the art. Generic principles disclosed herein may be implemented in other embodiments without departing from the spirit or scope of the present disclosure. Therefore, the present disclosure is not limited to the embodiments described herein but shall be construed as the broadest scope consistent with the principle and novel features disclosed herein.

## Claims

1. A method for controlling a converter at a zero-crossing point, **characterized in that**:
in the converter, each half-bridge arm of a secondary circuit connected to a transformer comprises a bidirectional switch, and the transformer is connected in series with an inductive device; and
the method comprises:
determining whether a current grid voltage is within a predetermined range of zero-crossing;
in response to the current grid voltage being not within the predetermined range, controlling a primary circuit and the secondary circuit, which are connected to the transformer, to operate in a normal operation mode; and
in response to the current grid voltage being within the predetermined range, controlling the primary circuit and the secondary circuit to operate in a predetermined operation mode.

2. The method according to claim 1, **characterized in that**:
the normal operation mode refers to an operation mode in which a normal strategy for controlling phase-shift and a normal strategy for controlling a secondary-side switch state are applied;
the predetermined operation mode is one of:
a first predetermined operation mode in which a predetermined strategy for controlling the phase-shift and the normal strategy for controlling the secondary-side switch state are applied;
a second predetermined operation mode in which the normal strategy for controlling the phase-shift and a predetermined strategy for controlling the secondary-side switch state are applied; or
a third predetermined operation mode in which the predetermined strategy for controlling the phase-shift and the predetermined strategy for controlling the secondary-side switch state are applied.

3. The method according to claim 2, **characterized in that** the predetermined strategy for controlling the secondary-side switch state comprises:
controlling switching transistors in all bidirectional switches to perform chopping operation under pulse width modulation (PWM) driving signals, wherein the driving signals of the switching transistors in a same half-bridge arm are identical, and the driving signals of the switching transistors in different half-bridge arms are complementary signals.

4. The method according to claim 3, **characterized in that** there is a dead band between the driving signals of the switching transistors in different half-bridge arms.

5. The method according to claim 4, **characterized in that** duration of the deadband is less than first predetermined duration.

6. The method according to claim 2, **characterized in that** the predetermined strategy for controlling the secondary-side switch state comprises:
controlling the secondary circuit to maintain an operation mode in which the secondary circuit operates currently.

7. The method according to claim 2, **characterized in that** the predetermined strategy for controlling the secondary-side switch state comprises:
controlling switching transistors in upper and lower half-bridge arms of the secondary circuit to be switched on.

8. The method according to claim 7, **characterized in that** duration of controlling the switching transistors in the upper and lower half-bridge arms of the secondary circuit to be switched on is less than second predetermined duration.

9. The method according to claim 2, **characterized in that**:
the predetermined strategy for controlling the phase-shift comprises open-loop control, and in the open-loop control, feedforward control is utilized to obtain an internal phase-shift angle and an external phase-shift angle that serves as a feedforward output.

10. The method according to claim 9, **characterized in that** after an operation mode of the primary circuit and the secondary circuit is determined, the method further comprises:
determining whether the current grid voltage is at a mode switching point; and
in response to the current grid voltage being at the mode switching point, performing, through soft-start, smooth switching between the external phase-shift angle under the normal strategy for controlling the phase-shift and the external phase-shift angle serving as the feedforward output.

11. The method according to any one of claims 1 to 10, **characterized in that** determining whether the current grid voltage is within the predetermined range of zero-crossing comprises:
determining whether an instantaneous value of the current grid voltage is within a predetermined amplitude range, or whether a phase angle of the current grid voltage is within a predetermined angle range;
in response to one or both of: the instantaneous value of the current grid voltage being within the predetermined amplitude range, and the phase angle of the current grid voltage being within the predetermined angle range,
determining that the current grid voltage is within the predetermined range of zero-crossing.

12. The method according to claim 11, **characterized in that** both the predetermined amplitude range and the predetermined angle range comprises:
a first range representing that the grid voltage crosses zero from positive to negative, and
a second range representing that the grid voltage crosses zero from negative to positive.

13. A converter, **characterized by** comprising:
a transformer, an inductive device, a primary circuit, a secondary circuit, and a controller, wherein:
a first side of the primary circuit serves as a first side of the converter,
a second side of the primary circuit is connected to a first side of the secondary circuit via the inductive device and the transformer that are connected in series,
a second side of the secondary circuit serves as a second side of the converter and is connected to a power grid,
each half-bridge arm of the secondary circuit comprises a bidirectional switch,
all switching transistors in the primary circuit and the secondary circuit are under control of the controller, and
the controller is configured to perform the method according to any one of claims 1 to 10.

14. The converter according to claim 13, **characterized in that**:
the primary circuit comprises at least one sub-module, and
when the at least one sub-module is more than one sub-modules, respective first sides of the sub-modules are connected in series or in parallel to form the second side of the primary circuit, and respective second sides of the sub-modules serve as ports of the first side of the primary circuit.

15. The converter according to claim 14, **characterized in that** each of the at least one sub-module is an H-bridge circuit.

16. The converter according to claim 13, **characterized in that**:
the secondary circuit comprises an alternating-current (AC) capacitor bridge arm and two half-bridge arms;
the two half-bridge arms are connected at a terminal of the first side of the secondary circuit,
an intermediate node of the AC capacitor bridge arm serves as another terminal of the first side of the secondary circuit, and
the two half-bridge arms as a whole are connected in parallel with the AC capacitor bridge arm between two terminals of the second side of the secondary circuit.

17. The converter according to claim 13, **characterized in that**:
the secondary circuit comprises four half-bridge arms,
the four half-bridge arms form two bridge arms, each of which comprises two half-bridge arms connected in series,
two terminals of each bridge arm are connected to two terminals, respectively, of the second side of the secondary circuit,
respective intermedia nodes of the two bridge arms serve as two terminals of the first side of the secondary circuit, and
a capacitor is connected between the two terminals of the second side of the secondary circuit.

18. The converter according to claim 13, **characterized in that**:
the secondary circuit comprises six half-bridge arms,
the six half-bridge arms form three bridge arms, each of which comprises two half-bridge arms connected in series,
two terminals of each bridge arm are connected to two terminals, respectively, of the first side of the secondary circuit,
respective intermedia nodes of the three bridge arms serve as three terminals of the second side of the secondary circuit, and
a respective capacitor is connected between every pair of the three terminals of the second side of the secondary circuit.

19. The converter according to any one of claims 13 to 18, **characterized in that** the inductive device comprises:
an inductor, or
an inductor and a capacitor that are connected in series.
